Europäisches Patentamt

European Patent Office

Office européen des brevets

(11) Veröffentlichungsnummer: **0 415 007 A1**

(12) # EUROPÄISCHE PATENTANMELDUNG

(21) Anmeldenummer: **90110425.7**

(51) Int. Cl.5: **G01N 27/409**

(22) Anmeldetag: **01.06.90**

Die Bezeichnung der Erfindung wurde geändert (Richtlinien für die Prüfung im EPA, A-III, 7.3).

(30) Priorität: **07.07.89 DE 3922331**

(43) Veröffentlichungstag der Anmeldung:
**06.03.91 Patentblatt 91/10**

(84) Benannte Vertragsstaaten:
**DE ES FR GB IT SE**

(71) Anmelder: **ROBERT BOSCH GMBH**
**Postfach 10 60 50**
**W-7000 Stuttgart 10(DE)**

(72) Erfinder: **Fries, Romuald, Dipl.-Ing.**
**Gerbersheimer Weg 5**
**W-7257 Ditzingen-Heimerdingen(DE)**
Erfinder: **Dettling, Peter**
**Bildäckerstrasse 3**
**W-7050 Waiblingen(DE)**

(54) **Gasmessfühler, insbesondere zur Bestimmung des Sauerstoffgehaltes in Abgasen von Brennkraftmaschinen.**

(57) Es wird ein Gasmeßfühler vorgeschlagen, der zum Ermitteln von Gaskomponenten, z.B. zur Bestimmung des Sauerstoffgehaltes in Abgasen von Brennkraftmaschinnen dienen kann. Dieser Gasmeßfühler hat ein Metall-Gehäuse (11), in dessen Längsbohrung (18) in Axialrichtung ein plättchenförmiger Sensorelement-Träger (23) angeordnet ist. Der Sensorelement-Träger (23) besitzt auf seinem meßgasseitigen Endabschnitt mindestens ein Sensorelement und ist gegebenenfalls mit mindestens einem Heizelement versehen. Auf dem Sensorelement-Träger (23) aufgebrachte Sensorelemente und Heizelemente sind mit dem meßgasfernen Endabschnitt des Sensorelement-Trägers (23) über Leiterbahnen verbunden und hier mit schichtförmigen Kontaktflächen (31) versehen. Auf diesen Kontaktflächen (31) liegen elektrische Verbindungselemente (42) unter mechanischer Vorspannung auf. Die Verbindungselemente (42) und die sich daran meßgasfern anschließenden Kabel-Verbindungshülsen (40) sind in einem Isolierteil (37) gehalten. Das Isolierteil (37) ist innerhalb einer meßgasfern am Metall-Gehäuse (11) festgelegten Verschlußhülse (15) angeordnet. Um bei Schüttelbeanspruchungen ein Durchscheuern der schichtförmigen Kontaktflächen (31) auf dem Sensorelement-Träger (23) zu verhüten, ist auf einer Stirnfläche (44', 48) des Isolierteils (37) ein ringförmiges Basisteil (50) eines Halteelementes (49) aufgelegt, welches mit Federelementen (51) ausgestattet ist, die in den Ringspalt (38) zwischen Isolierteil (37) und Metall-Gehäuse (11) bzw. Verschlußhülse (15) ragen; die Federelemente (51) stehen infolge von Auslenkungen (52) unter mechanischer Vorspannung.

FIG.2

# FIG. 3

## GASMESSFÜHLER

### Stand der Technik

Die Erfindung geht aus von einem Gasmeßfühler nach der Gattung des Hauptanspruchs. Bei diesem Gasmeßfühler, der beispielsweise aus der EP 0 087 626 81 bekannt ist, werden jedoch die schichtförmigen Kontaktflächen auf dem anschlußseitigen Abschnitt des Sensorelement-Trägers infolge der in Fahrzeugen auftretenden Schüttelbeanspruchungen von den aufliegenden, unter mechanischer Vorspannung stehenden Verbindungselementen durchgescheuert; das Durchscheuern der Kontaktflächen und demzufolge die Verschlechterung bzw. sogar die Unterbrechung der elektrischen Verbindung zwischen den Kontaktflächen und dem Anschluß führt zu verfälschten Meßergebnissen bzw. zumeist sogar zum Ausfall des Gasmeßfühlers.

Gasmeßfühler mit plättchenförmigem Sensorelement-Träger sind in vielen Varianten bekannt und sind in Abhängigkeit vom Verwendungszweck von unterschiedlicher Funktion und entsprechendem Aufbau (z. B. EP 0 087 626 B1, DE-OS 28 55 012, DE-OS 29 07 032, DE-OS 29 08 916, DE-OS 29 09 201, DE-OS 34 10 122).

### Vorteile der Erfindung

Der erfindungsgemäße Gasmeßfühler mit den kennzeichnenden Merkmalen des Hauptanspruchs hat demgegenüber den Vorteil, daß die auf dem plättchenförmigen Sensorelement-Träger aufgebrachten, schichtförmigen Kontaktflächen von den auf diesen Kontaktflächen aufliegenden, unter mechanischer Vorspannung stehenden elektrischen Verbindungselementen infolge von Schüttelbeanspruchungen nicht durchgescheuert und demzufolge auch nicht beschädigt oder sogar zerstört werden.

Als weiterer Vorteil ist anzusehen, daß sich die Erfindung einfach und billig verwirklichen läßt und in einer Großserienfertigung problemlos ausübbar ist.

Durch die in den Unteransprüchen aufgeführten Maßnahmen sind vorteilhafte Weiterbildungen und Verbesserungen des im Hauptanspruch angegebenen Gasmeßfühlers möglich. Besonders vorteilhaft ist es, wenn das erfindungsgemäße Halteelement mit angeformten Federelementen versehen ist, die als mit Auslenkungen versehenen Federelementen in Fingerform ausgebildet sind, dabei über den Umfang des ringförmigen Basisteils verteilt sind und in den Ringspalt zwischen Isolierteil und Metall-Gehäuse bzw. metallischer Verschlußhülse ragen.

### Zeichnung

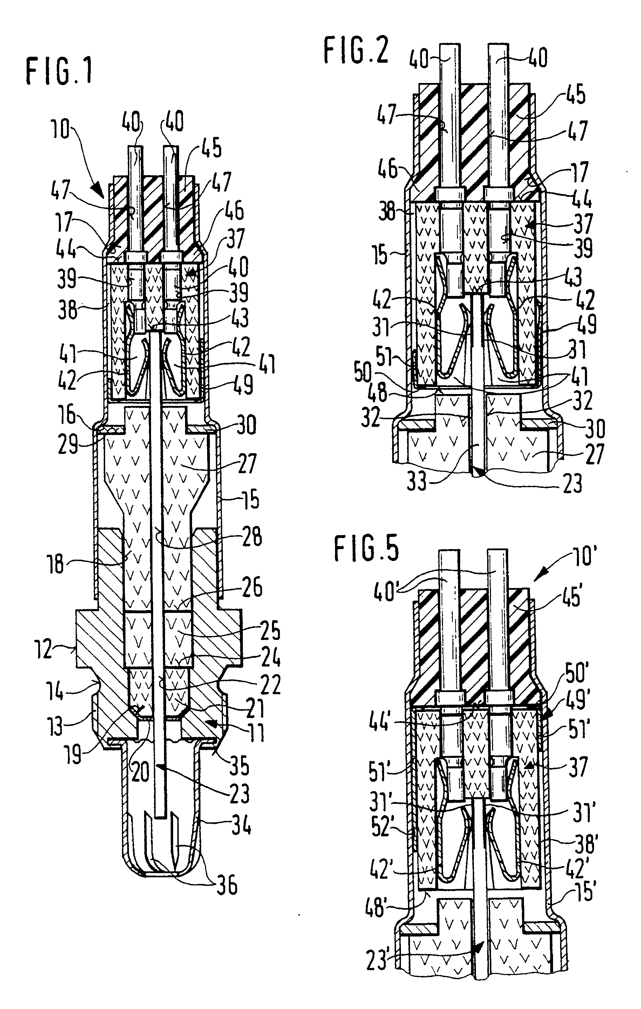

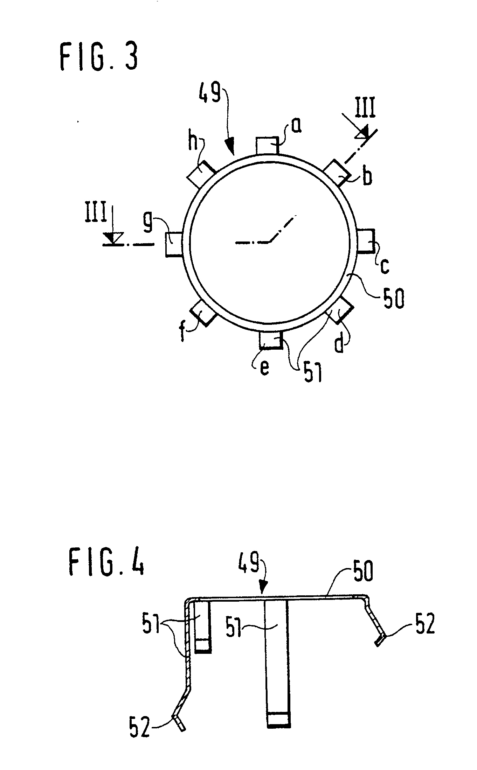

Ausführungsbeispiele der Erfindung sind in der Zeichnung dargestellt und in der nachfolgenden Beschreibung näher erläutert. Es zeigen Figur 1 einen Längsschnitt durch einen erfindungsgemäßen Gasmeßfühler in vergrößerter Darstellung, mit einer ersten Anordnung des erfindungsgemäßen Halteelementes, Figur 2 einen weiter vergrößerten Ausschnitt aus dem Längsschnitt des Gasmeßfühlers gemäß Figur 1, der die erste Anordnung des erfindungsgemäßen Halteelementes deutlicher zeigt, Figur 3 eine Draufsicht auf das erfindungsgemäße Halteelement in noch weiter vergrößerter Darstellung, Figur 4 eine Seitenansicht des Halteelementes nach Figur 3 entlang der Schnittlinie III/III und Figur 5 einen Ausschnitt aus dem Längsschnitt eines Gasmeßfühlers ähnlich dem gemäß Figur 2, jedoch mit einer zweiten Anordnung des erfindungsgemäßen Halteelementes.

### Beschreibung der Ausführungsbeispiele

Der in der Figur 1 der Zeichnung dargestellte Gasmeßfühler 10 hat ein Metall-Gehäuse 11, das an seiner Außenseite ein Schlüsselsechskant 12 und ein Gewinde 13 als Mittel für den Einbau des Gasmeßfühlers 10 in ein nicht dargestelltes Meßgasrohr aufweist: für den abdichtenden Einbau dieses Metall-Gehäuses 11 in dem Meßgasrohr dient ein ringförmigen Dichtelement (nicht dargestellt), welches in einer zwischen Schlüsselsechskant 12 und Gewinde 13 angeordneten Ringnut 14 unverlierbar festgelegt ist. Auf dem meßgasfernen Endabschnitt des Metall-Gehäuses 11 ist zur gewichtssparenden Verlängerung des Metall-Gehäuses 11 eine Verschlußhülse 15 koaxial aufgeschoben und befestigt (z. B. durch Schweißen), welche über ihre Länge zwei meßgasseits weisende Schultern 16 und 17 hat und an ihrem meßgasfernen Ende offen ist.

Das Metall-Gehäuse 11 weist eine Längsbohrung 18 mit einem koaxialen Absatz 19 auf, der der Meßgasseite des Gasmeßfühlers 10 abgewendet ist und einen Metallring 20 aus weichem Material wie Nickel tragt. Auf diesem Metallring 20 liegt meßgasfern ein erstes keramisches Führungsteil 21 auf, welches seitlich in der Längsbohrung 18 des Metallgehäuses 11 fixiert ist und einen axial hindurchgehenden Führungsdurchlaß 22 für einen plättchenförmigen Sensorelement-Träger 23 hat; das erste keramische Führungsteil 21 kann dabei beispielsweise aus gesintertem Steatit bestehen. Auf der meßgasfernen Stirnfläche 24 des ersten Führungsteils 21 ist eine keramische Dichtungs masse 25 angeordnet, welche einen Längsabschnitt des Sensorelement-Trägers 23 abdichtend umfaßt und den entsprechenden Bereich in der Längsbohrung 18 des Metall-Gehäuses 11 abdichtend ausfüllt; als Material für diese Dichtungsmasse 24 kann ungesintertes Steatit zur Verwendung kommen. Auf der meßgasfernen Stirnfläche 26 der keramischen Dichtungsmasse 25 steht ein zweites keramisches Führungsteil 27, welches mit seinem meßgasseitigem Endabschnitt in der Längsbohrung 18 des Metall-Gehäuses 11 geführt ist, beispielsweise auch aus gesintertem Steatit bestehen kann und einen axial verlaufenden Führungsdurchlaß 28 für den Sensorelement-Träger 23 aufweist. Der meßgasferne Abschnitt dieses zweiten keramischen Führungsteils 27 ist kopfförmig ausgebildet und mit einer anschlußseits weisenden, koaxialen Schulter 29 versehen. Auf dieser ringförmigen Schulter 29 liegt der innere Bereich eines ringförmigen Federelementes 30 auf, während sich der äußere Bereich dieses Federelementes 30 an der Schulter 16 der Verschlußhülse 15 abstützt und infolge mechanischer Vorspannung das zweite keramische Führungsteil 27 gegen die keramische Dichtungsmasse 25 und das am Metallring 20 anliegende erste Führungsteil 21 andrückt.

Der Sensorelement-Träger 23 ragt mit seinem meßgasseitigen Endabschnitt aus der Längsbohrung 18 des Metall-Gehäuses 11 heraus und weist in diesem Bereich ein oder mehrere nicht dargestellte Sensorelemente, gegebenenfalls auch ein oder mehrere nicht dargestellte Heizelemente auf; Beispiele derartiger Sensorelement-Träger 21 bzw. Sensor- und Heizelemente sind in den in der Beschreibungseinleitung aufgeführten Druckschriften enthalten. Die Sensor- bzw. Heizelemente sind mit dem meßgasfernen, aus dem zweiten keramischen Führungsteil 27 herausragenden Abschnitt über Leiterbahnen verbunden, welche bevorzugt aus einem Platinmetall bestehen; der meßgasferne Endabschnitt dieser in der Figur 1 nicht dargestellten Leiterbahnen ist bevorzugterweise etwas verbreitert, häufig auch etwas in der Dicke verstärkt. Diese meßgasfernen Bereiche der nicht dargestellten Leiterbahnen stellen die elektrischen Kontaktflächen 31 des Sensorelement-Trägers 23 dar (s. Fig. 2); derartige Kontaktflächen 31 können sich auf mindestens einer der beiden Großflächen 32 des Sensorelement-Trägers 23 befinden, gegebenenfalls auch auf einer oder beiden von dessen Schmalseiten 33. Infolge der keramischen Dichtungsmasse 25, die in der Längsbohrung 18 des Metall-Gehäuses 11 einen Teil des Sensorelement-Trägers 23 abdichtend umgibt, ist der Sensorelement-Träger 23 in einen meßgasseitigen und in einen meßgasfernen Abschnitt unterteilt. Der bereits erwähnte meßgasseitige, bevorzugterweise aus dem Metall-Gehäuse 11 herausragende Abschnitt des Sensorelement-Trägers 23 ist von einer Schutzhülse 34 mit Abstand umgeben, die aus Metall oder einem anderem den Meßgasen widerstehenden Material besteht, mit ihrem einen Endabschnitt an der meßgasseitigen Stirnfläche 35 des Metall-Gehäuses 11 befestigt ist und in ihrem Mantel und/oder ihrem meßgasnahem Boden mit Öffnungen 36 für den Meßgasein- und -auslaß ausgestattet ist.

Innerhalb der Verschlußhülse 15 schließt sich meßgasfern dem zweiten keramischen Führungsteil 27 ein keramisches Isolierteil 37 an, daß mit der Verschlußhülse 15 einen Ringspalt 38 bildet und in Längsrichtung Durchgangsöffnungen 39 für Kabel-Verbindungshülsen 40 bzw. damit meßgasseits in Verbindung stehende Aufnahmekammern 41 für elektrische Verbindungselemente 42 besitzt; die Verbindungselemente 42 sind haarnadelförmig geformt, mit ihrem einen Schenkel an einer Kabel-Verbindungshülse 40 befestigt und liegen mit ihrem freien Schenkel unter mechanischer Vorspannung auf einer Kontaktfläche 31 des Sensorelement-Trägers 23 fest auf. Die meßgasferne Stirnfläche 43 des Sensorelement-Trägers 23 liegt dabei innerhalb der Aufnahmekammer 41 am Isolierteil 37 an.

Auf der meßgasfernen Stirnfläche 44 des Isolierteils 37 liegt ein elastischer Isolierstopfen 45 auf, der in diesem Bereich als Flansch 46 ausgebildet ist und mit diesem Flansch 46 an der Schulter 17 der Verschlußhülse 15 anliegt; dieser Isolierstopfen 45 sitzt abdichtend in dem meßgasfernen Endabschnitt der Verschlußhülse 15 und enthält in Längsrichtung verlaufende Durchgangsbohrungen 47 für die sich hier erstreckenden Kabel-Verbindungshülsen 40 bzw. geeignete Verbindungsstifte. Die Verbindungshülsen 40 bzw. die Verbindungsstifte werden in ihren Durchgangsbohrungen 47 abdichtend umfaßt.

Auf der meßgasseitigen Stirnfläche 48 des Isolierteils 37 liegt ein Halteelement 49 auf, welches aus dünnem federnden Material besteht, ein ringförmiges Basisteil 50 besitzt und mit über den Umfang des Basisteils 50 verteilten Federelementen 51 versehen ist; die Federelemente 51 ragen dabei fingerförmig in den Ringspalt 38 zwischen Isolierteil 37 und Verschlußhülse 15. Um das Isolierteil 37 mit den elektrischen Verbindungselementen 42 schwingungsfrei innerhalb der Verschlußhülse 15 zu halten, sind die Federelemente 51 mit Auslenkungen 52 ausgestattet (siehe Figuren 3 und 4), welche einerseits am Isolierteil 37 und andererseits an der Innenseite der Verschlußhülse 15 unter mechanischer Vorspannung anliegen. Die freien Endabschnitte der Federelemente 51 sind in Richtung auf die Längsachse des Sensorelement-Trägers 23 gerichtet, um die Montage zu erleichtern. In dem gezeigten Beispiel besitzt das Halteelement 49 acht über den Umfang des Basisteils 50 verteilte fingerförmige Federelemente 51, die an der Außenseite des Basisteils 50 mit angeformt sind und paarweise von unterschiedlicher Länge sind: Die einzelnen Federelemente 51 in der Figur 3 sind zur Erläuterung mit den Buchstaben a bis h gekennzeichnet; die Federelemente a, c, e und g sind dabei als längere Federelemente 51 ausgebildet und besitzen Auslenkungen 52, welche in einer gemeinsamen, senkrecht zur Längsbohrung 18 des Metall-Gehäuses 11 befindlichen Ebene liegen, während die Federelemente 50b, d, f und h kürzer gehalten sind und sich mit ihren Auslenkungen 52 in einer zweiten gemeinsamen, senkrecht zur Längsbohrung 18 des Metall-Gehäuses 11 verlaufenden Ebene befinden.

Die beiden genannten Ebenen und die Auslenkungen 52 sind derart angeordnet, daß das Isolierteil 37 sicher fixiert innerhalb der Verschlußhülse 15 gehalten ist. Der Außendurchmesser des Basisteils 50, der dem Abstand zweier einander gegenüberliegender Federelemente 51 entspricht, ist so bemessen, so daß er über den Durchmesser des Isolierteils 37 justierend faßt. Anstelle von in der Figur 4 dargestellten eckigen Auslenkungen 52 können auch abgerundete Auslenkungen Verwendung finden, es können auch Federelemente 51 mit mehreren Auslenkungen 52 benutzt werden. Je nach Anwendungsfall kann in der Anzahl der fingerförmigen Federelemente 51 variiert werden und anstelle von zwei Ebenen, in denen die Auslenkungen 52 angreifen, können auch mehrere Ebenen sinnvoll sein. - Bei einer etwas aufwendigeren, jedoch funktionell noch besseren Ausführungsform eines Halteelementes wird anstelle von fingerförmigen Federelementen 51 ein nicht dargestellter rohrförmiger Abschnitt verwendet, in welchen in radialer Richtung wirkende, eingeformte Auslenkungen als Federelemente dienen.

In der Figur 5 ist eine Alternative zur Anordnung des Halteelementes 49 gemäß Figur 2 dargestellt: Nach diesem Ausführungsbeispiel wird das Halteelement 49' mit seinem ringförmigen Basisteil 50' auf die meßgasferne Stirnfläche 44' des Isolierteils 37' aufgelegt; die Federelemente 51' ragen dann in Richtung Meßgasseite des Gasmeßfühlers 10' in den Ringspalt 38' zwischen Isolierteil 37' und Verschlußhülse 15'. Das über den Aufbau des Halteelementes 49 Gesagte gemäß dem ersten Ausführungsbeispiel gilt hier entsprechend. Der Vorteil dieser Anordnung ist darin zu sehen, daß anläßlich der Montage das Halteelement 49' zwischen dem Isolierteil 37' und dem meßgasfern sich anschließenden Isolierstopfen 45' gehalten wird und daß das Einbringen der Montagegruppe "Isolierteil 37', Halteelement 49', Isolierstopfen 45', Kabelverbindungshülsen 40' und elektrische Verbindungselemente 51''' in den Innenraum der Verschlußhülse 50' einfacher ist. Der Wirkmechanismus des Halteelementes 49' entspricht dem des Halteelementes 49 gemäß dem ersten Ausführungsbeispiel, zweckmäßig kann es jedoch sein, wenn sich die am weitesten meßgasseits befindlichen Auslenkungen 52' möglichst nahe der meßgasseitigen Stirnfläche 48' des Isolierteils 37' befinden.

Infolge der vorstehend beschriebenen Anordnungen eines Halteelementes 49, 49' wird sicher vermieden, daß die elektrischen Verbindungselemente 42, 42' die Kontaktflächen 31, 31' auf dem Sensorelement-Träger 23, 23' durchscheuern, wobei die Halteelemente 49, 49' einfach herstellbar sowie auch sicher fixierbar und montierbar sind.

**Ansprüche**

1. Gasmeßfühler (10' 10'), insbesondere Gasmeßfühler zur Bestimmung des Sauerstoffgehaltes in Abgasen von Brennkraftmaschinen, mit einem rohrförmigen Metall-Gehäuse (11), das Mittel (12, 13, 14) für den abdichtenden Einbau des Gasmeßfühlers in eine Meßgasleitung besitzt und in seiner Längsbohrung (18) mindestens einen Längsabschnitt eines Sensorelement-Trägers (23, 23') enthält, welcher plättchenförmig ist, in Längsrichtung innerhalb der Längsbohrung (18) angeordnet ist, mittels einer quer in der Längsbohrung (18) des Metall-Gehäuses (11) befindlichen Dichtung (25) in einen meßgasseitigen Abschnitt und einen anschlußseitigen Abschnitt unterteilt ist und auf mindestens einer Großfläche (32) seines anschlußseitigen Abschnittes eine oder mehrere schichtförmige Kontaktflächen (31, 31') trägt, welche jeweils über eine Leiterbahn mit einem Sensorelment bzw. einem Heizelement in elektrischer Verbindung stehen und auf denen jeweils ein unter mechanischer Vorspannung befindliches elektrisches Verbindungselement (42, 42') aufliegt, wobei derartige Verbindungselemente (42, 42') anschlußseits mit einem aus dem Gasmeßfühler (10, 10') abgedichtet herausgeführten Anschlußmittel elektrisch verbindbar sind und in einer längsverlaufenden Aufnahmekammer (41, 41') eines in Längsrichtung im Metall-Gehäuse (11) bzw. in einer am Metall-Gehäuse (11) festgelegten metallischen Verschluß hülse (15, 15') fixierten Isolierteils (37, 37') gehalten werden, welches in dem anschlußseitigen Bereich der Längsbohrung (18) des Metall-Gehäuses (11) bzw. der am Metall-Gehäuse (11) festgelegten metallischen Verschlußhülse (15, 15') koaxial angeordnet ist und dabei einen Ringspalt (38, 38') zwischen dem Isolierteil (37, 37') und dem Metall-Gehäuse (11) bzw. der Verschlußhülse (15, 15') beläßt, dadurch gekennzeichnet, daß der Gasmeßfühler (10, 10') für das Isolierteil (37, 37') ein Halteelement (49, 49') aufweist, welches zu seiner Längsfixierung mit einem ringförmigen Basisteil (50, 50') auf einer der beiden Stirnflächen (48' 44') des Isolierteils (37, 37') aufliegt und mit mehreren, über den Umfang verteilten und an das ringförmige Basisteil (50, 50') angeformten, in den Ringspalt (38, 38') zwischen Isolierteil (37, 37') und Metall-Gehäuse (11) bzw. Verschlußhülse (15, 15') ragenden Federelementen (51, 51') versehen ist, die am Außenmantel des Isolierteils (37, 37') und am Metall-Gehäuse (11) bzw. an der Verschlußhülse (15, 15') unter mechanischer Vorspannung anliegen.

2. Gasmeßfühler (10, 10') nach Anspruch 1, dadurch gekennzeichnet, daß radial einander gegenüberliegende Federelemente (51, 51') des Halteelementes (49, 49') in einer gemeinsamen, senkrecht zur Längsbohrung (18) des Metall-Gehäuses (11) verlaufenden Ebene am Isolierteil (37, 37') anliegen.

3. Gasmeßfühler (10, 10') nach Anspruch 2, dadurch gekennzeichnet, daß die Federelemente (51, 51') abwechselnd in mindestens zwei senkrechten zur Längsbohrung (18) des Metall-Gehäuses (11) verlaufenden Ebenen am Isolierteil (37, 37') anliegen.

4. Gasmeßfühler (10, 10') nach einem der Ansprüche 1 bis 3, dadurch gekennzeichnet, daß sich die an das Basisteil (50, 50') angeformten Federelemente (51, 51') fingerförmig in den Ringspalt (38, 38') erstrecken und quer zu ihrer Längsrichtung eingeformte Auslenkungen (52, 52') haben, mit welchen sie am Isolierteil (37, 37') und/oder in der Längsbohrung (18) des Metall-Gehäuses (11) bzw. der Verschlußhülse (15, 15') anliegen.

5. Gasmeßfühler (10, 10') nach Anspruch 4, dadurch gekennzeichnet, daß der freie Endabschnitt der fingerförmigen Federelemente (51, 51') auf die Längsachse des Sensorelement-Trägers (23, 23') gerichtet ist.

6. Gasmeßfühler (10, 10') nach Anspruch 4 oder Anspruch 5, dadurch gekennzeichnet, daß das Halteelement (49, 49') über den Umfang seines ringförmigen Basisteils (50, 50') acht gleichmäßig verteilte fingerförmige Federelemente (51, 51') hat.

EP 0 415 007 A1

FIG.1

FIG.2

FIG.5

7

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | US - A - 4 824 550 (KER) <br> * Fig.; Ansprüche * <br> -- | 1-6 | G 01 N 27/409 |
| A | US - A - 4 556 475 (BAYHA) <br> * Fig. 1; Spalte 3, Zeilen 25-33 * <br> -- | 1 | |
| A | US - A - 4 750 256 (WERTHEIMER) <br> * Fig. 10; Zusammenfassung * <br> ---- | 1 | |
| | | | **RECHERCHIERTE SACHGEBIETE (Int Cl⁵)** |
| | | | G 01 N |

Der vorliegende Recherchenbericht wurde für alle Patentansprüche erstellt

| Recherchenort | Abschlußdatum der Recherche | Prüfer |
|---|---|---|
| WIEN | 22-10-1990 | NARDAI |